# EUROPEAN PATENT SPECIFICATION

(11) **EP 0 420 860 B1**
(45) Date of publication and mention of the grant of the patent: **16.02.1994**
(21) Application number: 89905798.8
(22) Date of filing: 25.05.1989
(51) Int. Cl.: D21C 3/00, D21C 3/24, D21C 5/02

(54) **PROCESS AND APPARATUS FOR THE MANUFACTURE OF PULP FOR PAPER, BOARD, FIBERBOARD AND SIMILAR PRODUCTS**
VORRICHTUNG UND VERFAHREN ZUR HERSTELLUNG VON PAPIERPULPE, PAPPE, FASERBRETTERN UND ÄHNLICHEN ERZEUGNISSEN
PROCEDE ET APPAREIL DE FABRICATION DE PULPE POUR PAPIER, CARTON, PANNEAUX DE FIBRES ET PRODUITS SIMILAIRES

(30) Priority: 24.06.1988 NO 882815
(43) Date of publication of application: 10.04.1991
(73) Proprietor: FONGEN, Sigurd, N-1410 Kolbotn (NO)
(72) Inventor: FONGEN, Sigurd, N-1410 Kolbotn (NO)
(74) Representative: Carter, Gerald
(86) International application number: PCT/NO89/00051
(87) International publication number: WO 89/12716

(56) References cited:
- WO-A-88/06201
- NO-C- 90 008
- SE-B- 415 202
- US-A- 1 632 802
- US-A- 3 313 677
- US-A- 3 557 583
- US-A- 3 795 577

## Description

The present invention relates to continuous production of pulp by means of a combined chemical and mechanical method for digesting plant and wood fibres to obtain a pulp to be used as the raw material for production of paper, board, fibreboard and other fibre-containing products. The present process is also well suited for deinking and washing of cellulose fibres, delignification and, optionally, bleaching of secondary fibres.

In WO-A-88/06201 filed on February 11, 1988 with claim to priority inter alia from NO-A-870562 filed on February 12, 1987, there is disclosed a process for digesting plant and wood fibres and/or for delignification, optionally with prior deinking, of secondary fibres, possibly with subsequent bleaching, in order to obtain a pulp which is suitable for use as the raw material for production of paper, board, fibreboard and paper products which contain plant and/or wood fibres. The fibrous raw material is introduced into a digestion zone and is digested therein in an alkaline slurry at an elevated temperature and pressure using an alkaline cooking chemical in combination with oxygen and, optionally, minor amounts of other additives, such as anthraquinone. The cooking chemicals are removed from the digestion zone in the form of a black liquor which is deposited or subjected to recovery of chemicals therefrom. The process according to the above-mentioned international application is characterized in that the pulp and chemical substances are transported during digestion and optional bleaching in the form of a pumpable slurry through a closed, continuous and pressurized tube system by means of pulp pumps which are simultaneously used as mixing aggregates for the slurry and the chemicals. While being conducted through the tube system the pulp slurry is repeatedly subjected to dewatering by pressing out liquid from the pulp slurry, and, prior to each dewatering stage, the pulp is diluted with pressed out process liquid returned from a downstream dewatering stage and/or from a downstream pumping stage.

SE-B-415202 discloses dewatering means for dewatering a pulp slurry in order to produce pulp plugs. The dewatering means comprises a flexible membrane intended to alternately rest on and lift from a perforated dewatering tube in synchronism with the expulsion of a pulp plug or the back-flushing used to prevent blockage of the openings in the dewatering tube. Apart from the fact that such dewatering means is designed to produce pulp plugs, rather than simply serving a screening function, the use of such dewatering means is inconvenient in practice due to the need for back-flushing.

It is an object of the invention to provide a process for the production of a pulp which is suitable for use as the raw material for paper, board, fibreboard and other products which contain plant and/or wood fibres, the process to be carried out at stepwise increasing pressure in a closed, pressurized tube system comprising several pumping and pressure stages in succession while using several circulation circuits for the pulp suspension at the different pumping stages with the object of improving the transfer of thickened pulp from one pumping stage into the next pumping stage of higher pressure in order to secure improved pulp flow through the system compared with the transfer of thickened pulp disclosed in said international application. Likewise, it is also an object of the invention to enhance the turbulence of the fibre suspension thereby promoting the speed of reaction between fibres and process liquid, i.e. so as to obtain an increased "washing machine effect" as compared with the effect obtained by the process according to said international application.

According to the present invention there is provided a process for digesting and, optionally, bleaching of plant and wood fibres and/or for delignification and, optionally, deinking of secondary fibres in order to obtain a pulp which is suitable for use as the raw material for production of paper, board, fibreboard and other products which contain plant and/or wood fibres, the process comprising the steps of:
introducing fibrous raw material into a digestion zone in which the raw material is digested in an alkaline slurry at an elevated temperature and pressure using an alkaline cooking chemical in combination with oxygen, and, optionally, minor amounts of other additives, such as antraquinone,
removing the cooking chemicals from the digestion zone in the form of a black liquor which is deposited or subjected to recovery of chemicals therefrom,
conducting the raw material in the form of a pumpable fibre-containing slurry during digestion and optional bleaching through a closed, continuous and pressurized tube system by means of pulp pumps which are simultaneously used as mixing aggregates for the slurry and the chemicals,
subjecting the fibre-containing slurry, while being conducted through the tube system, to repeated dewaterings by pressing out liquid from the fibre-containing slurry,
prior to each dewatering stage apart from the last dewatering stage, diluting the dewatered fibre-containing slurry with pressed out process liquid returned from a pumping stage which is disposed downstream in the fibre flow,
subjecting the fibre-containing slurry, while being conducted through the tube system, to stepwise increasing pressure in three or more pumping stages,
prior to the last dewatering stage, diluting and, optionally, cooling the fibre-containing slurry with fresh water and/or bleaching liquor supplied under pressure, and
after the last dewatering stage, washing the pulp so obtained and, optionally, bleaching the pulp in a continuation of the pressurized tube system or in the non-pressurized state after cold or hot blowing from the pressurized tube system,
characterised in that, at least at each pumping stage intermediate the first and last pumping stages, two circulation flows are maintained by and circulate through the same circulation pump, one of the circulation flows comprising mainly fibre-containing slurry and the other circulation flow comprising mainly process liquid pressed out of the fibre-containing slurry in a dewatering-thickening means disposed downstream in the fibre flow and recycled therefrom to the suction side of said circulation pump so that the pressed out process liquid is mixed at said suction side with the fibre-containing slurry circulating in said one circulation flow, thereby forming a fibre-containing slurry diluted with the pressed out and recycled process liquid, that part of the diluted fibre-containing slurry is circulated back to a further dewatering-thickening means and the dewatered fibre-containing slurry from said further dewatering-thickening means is passed back to said suction side of the circulation pump of the same pumping stage for mixing with process liquid pressed out in and recycled from the first-mentioned dewatering-thickening means, and that the dewatered and thickened fibre-containing slurry is discharged from the first-mentioned dewatering-thickening means to the next circulation flow comprising mainly fibre-containing slurry in the next succeeding pumping stage of higher pressure in the process.

The invention also provides apparatus for continuous dewatering, degassing and thickening of low consistency fibre-containing slurry comprising an outer tube and a smaller, perforated dewatering and venting tube arranged centrally and axially within the outer tube for dewatering and degassing fibre-containing slurry through the perforations therein, the apparatus being further provided with an inlet for fibre-containing slurry at one end, an outlet for thickened fibre-containing slurry at the other end, and an outlet for filtrate near said one end,
characterized in that the inlet is arranged to introduce low consistency fibre-containing slurry substantially radially into the outer tube at said one end, the outlet is arranged to discharge thickened fibre-containing slurry from the outer tube at said other end, and the outlet is arranged to remove filtrate and gas from the centrally arranged dewatering and venting tube, the outer tube being similar to a hydrocyclone, and that the centrally arranged venting tube comprises a dewatering screen in the form of a thin, perforated, electrolytically produced metal foil having perforation holes with diameters preferably in the range from 30 to 120 µm, having a foil thickness preferably in the range from 70 to 150 µm and having an open area preferably in the range from 7 to 30%, the dewatering screen being supported on a woven, coarse screen made of metal or plastic wires which in turn is supported on a rigid framework in the form of a perforated metal body, whereby the dewatering screen, because of its perforation characteristics and its thickness, is kept continuously open and cleaned by continuous flushing thereof with said fibre-containing slurry introduced substantially radially into and set into turbulence in the outer tube.

In order that the invention may be more fully understood, reference will now be made, by way of example, to the accompanying drawings, in which:
Fig. 1 shows an example of the mechanical building up of the system for carrying out the process of the invention, the system consisting of a closed, pressurized tube system which has been divided internally into several similar pumping stages with pressure levels increasing from left to right in the Figure.
Fig. 2 shows three examples of tube perforations used in the dewatering apparatus according to the invention.
Fig. 2a shows a section through a screen system for covering the perforations.
Fig. 3 shows an embodiment of the dewatering apparatus according to the invention.
Fig. 4 shows another embodiment of the dewatering apparatus according to the invention.

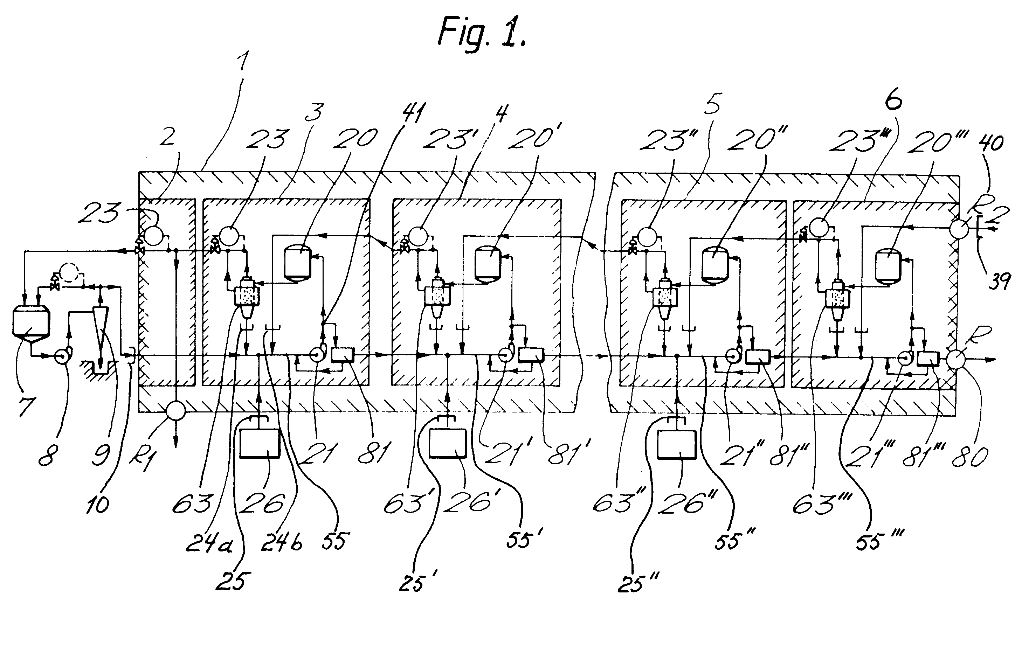

Fig. 1 shows an example of the mechanical building up of the system in the form of a closed, pressurized tube system 1 which has been divided internally into several similar pumping and pressure stages, exemplified in the Figure by means of the reference numerals 2, 3, 4, 5 and 6 with increasing pressure levels from 2 to 6.

To this closed pressurized tube system fibrous raw material is supplied from a pulper 7, the fibrous raw material from the pulper being fed into the pressurized tube system through a pump 8, a cleaning means 9 for the fibre suspension and a check valve 10. The pump 8 is a pulp pump of conventional construction and sets the fibre suspension coming from the pulper 7 under pressure corresponding to the pressure level in pressure stage 2.

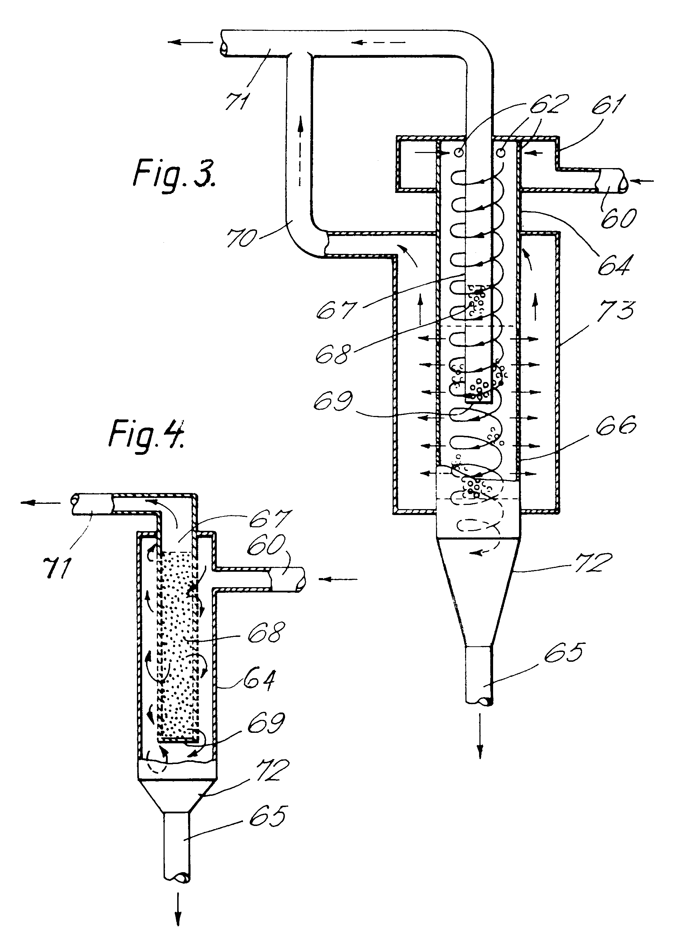

In the transition between pumping and pressure stages 2 and 3 a dewatering apparatus 63 is arranged which has been shown in more detail in Figs. 3 and 4.

Moreover, each separate pumping and pressure stage, apart from pumping stages 2 and 6, consists, as shown in Fig. 1, of a container 20, a pump 21, overflow or reducing valves (PIC valves) 23 and check valves 24a and 24b and dewatering means 63 and 81. At the suction side of the pump 21 heat (steam) and chemicals for the digestion or delignification process are supplied from a supply means 26 through a check valve 25.

Fresh water is passed into the process system through a check valve 39 (Fig. 1) and the amount of fresh water introduced into the process system is controlled by means of a regulator R₂ 40. By means of the same circulation pump 21 two circulation circuits are maintained in the pumping stages 3, 4, 5 and 6, i.e. circulation of fibre suspension which comes from the dewatering apparatus 63 and which is passed through the tube 55 to the pump 21, and from the pump 21 to the junction 41 and thence into the container 20 and to the dewatering apparatus 63 and back to pump 21. In the second circulation circuit of pumping stage 3 pulp suspension is branched off from the junction 41, through the dewatering means 81 back to the tube 55 and pump 21. Identical circulation circuits are maintained in the pumping stages 4, 5 and 6. Accordingly, at each of the pumping stages 3, 4, 5 and 6, two circulation circuits are maintained by means of one circulation pump 21 only at each pumping and pressure stage.

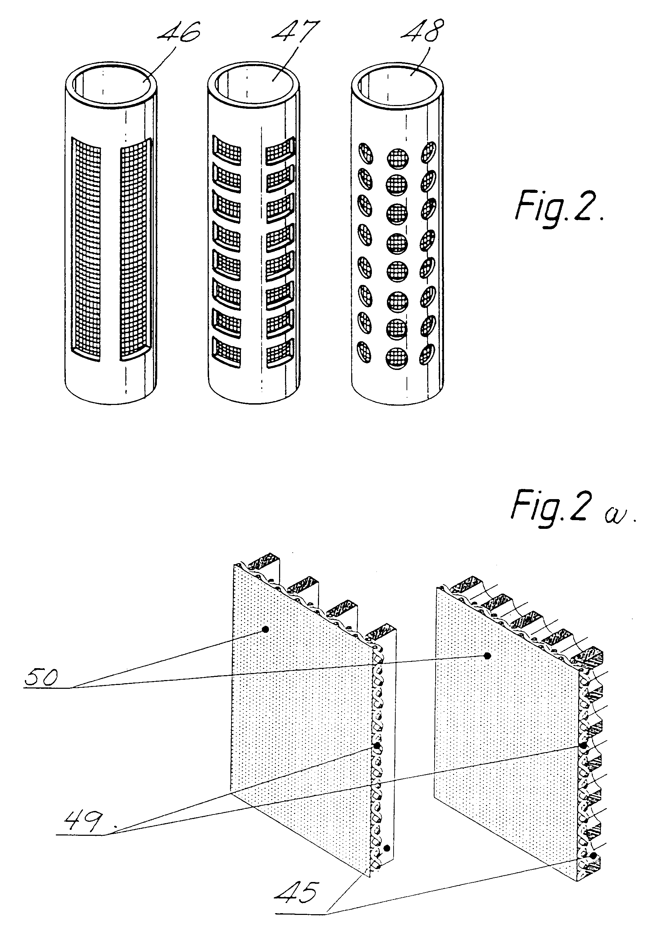

Fig. 2 shows three examples of tube perforations, 46, 47 and 48 respectively, for the dewatering apparatuses 63, 63' 63'' and 63''' (Fig. 1), shown in more detail in Fig. 3 and Fig. 4.

Fig. 2a shows how the perforations according to embodiments 46 and 48 respectively of Fig. 2 are covered by a screen system consisting of a woven relatively coarse screen 49 made of plastic or metal wires placed in contact with a rigid perforated supporting member 45, and a dewatering screen 50 in the form of a thin, perforated metal foil 50 placed upon and in contact with the screen 49.

Fig. 3 shows an embodiment of tubular pressurized dewatering apparatus designed to be similar to a hydrocyclone but containing additional elements which ensure a combined effect in the form of concurrent dewatering and separation of gas from the fibre suspension introduced into the dewatering apparatus. Concurrent cleaning of the perforated screen faces is carried out by continuously flushing the perforated screen faces with pulp suspension introduced into the dewatering apparatus.

Pumping pressure and the design of the apparatus act in combination to set the pulp suspension introduced therein in rotation and/or turbulence. The dewatering takes place both radially outwardly through a perforated part 66 of a dewatering tube 64 and concurrently radially inwardly through a perforated part 68 of a tube 67 of smaller diameter than the tube 64 and arranged axially within the tube 64. Gas also separates from the suspension and escapes through the perforated part 68 of the inner tube 67, and the perforations of the tube part 66 and of the tube part 68 are kept clean by flushing new suspension continuously over the inner surface of the tube part 66 and the outer surface of the tube part 68.

Through a tube 60 (Fig. 3) pulp suspension is pumped into a distributing chamber 61 from which the pulp suspension is sprayed through openings 62 substantially radially into the dewatering tube 64 which according to Fig. 3 is partly enclosed by a tubular jacket 73. The tube 64 ends in a hollow cone 72 leading into an outlet tube 65 for dewatered and partly degasified pulp suspension.

Within the jacket 73 the tube part 66 of the tube 64 is perforated in the same manner as previously disclosed in connection with Fig. 2, and the inner surface of the perforated tube part 66 is provided with a thin perforated metal sheet 50 and one or more layers 49 (Fig. 2a) of woven screens.

The perforated part 68 of the smaller tube 67 is also perforated in the same manner as disclosed above in connection with Fig. 2, but with the perforated metal sheet or foil 50 and woven screens 49 (Fig. 2a) being placed upon the outer surface of the tube part 68.

The mixture of suspension liquid and gas passes through the tube 67 and into a tube 71 which forms a continuation of the inner tube 67 from its end distant from its end 69, and in the tube 71 suspension liquid and gas become admixed with suspension liquid which escapes through a tube 70 from the space between the tube 64, 66 and the surrounding jacket 73, and the combined suspension liquids flow through the tube 71 in the direction towards the beginning of the pulping process.

The dewatering apparatus disclosed above in connection with Fig. 3 will automatically return gas, including mainly oxygen, added to the pulp suspension, throughout the entire process and countercurrently to the fibre flow. The gas is added at a high pressure level towards the end of the process and, accordingly, will automatically be carried towards increasingly lower pressure stages with steady expansion, which is a feature which, moreover, also ensures optimum influence from the gas and utilization of the gas during the process.

Thickened, dewatered pulp leaves the dewatered apparatus according to Fig. 3 through the tube 65 and is conveyed to the inlet of the circulation pump 21 used for circulating fibre suspension back into said dewatering apparatus 63 (Fig. 1).

If only the inner tube 67 is perforated (at 68), i.e. the outer tube 64 is not perforated, the outer jacket 73 becomes superfluous and may be omitted, and the outer tube 64 will then function as a jacket surrounding the inner tube 67, and gas and liquid will be removed from the pulp suspension solely through the perforations (at 68) in the inner tube 67 which then has its end 69 closed (Fig. 4).

The metal sheets or foils used as perforated screens 50 (Fig. 2a) for the dewatering tubes 64 and/or 67 have been electrolytically produced and consist of pure metal, preferably nickel. When process chemicals are used which form complexes with nickel, e.g. ammonia, more noble metals are used.

The thickness of the foil can vary between 70 and 150 µm, and its distribution of perforations is preferably within the range from 0,127 to 0,074 mm (120 to 200 mesh). In cases of high demands to the screening efficiency a higher mesh range can be used.

The diameter of the perforations preferably varies between 30 and 120 µm dependent upon the type of fibre being processed and on production requirements.

Thus, the open area of the perforated metal foil preferably varies between 7 and 30% of the total screen surface.

As support for the perforated metal foil 50 a screen 49 woven from acid resistant metal or plastic wires may be used, woven to a mesh number of from 2,00 to 0,84 mm (10 to 20 mesh). The screen cloth is supported by a perforated metal body 45 preferably acid resistant material (Fig. 2a).

The dewatering device 81 (Fig. 1) can consist of a pressurized screw press or pressurized piston press of known construction and mode of operation, and the dewatering device 81 has for that reason not been shown in detail.

According to Fig. 1, the amount of finished pulp discharged from the pressurized tube system is controlled by means of a mass control 80.

The fibre raw material is pulped in the pressurized tube system as previously disclosed in the above mentioned international application PCT/NO88/000111 with the formation of a pumpable suspension having a content of dry solids from 2 to 5%, preferably within the range of from 3 to 5%, or from 2.5 to 3.0%.

By means of the pump 8 (Fig. 1), the suspension is pumped at constant pressure through the cleaning system 9, then through the check valve 10 and into the pressurised system. The inlet pressure is controlled by means of PIC valves 23.

In the pressurized tube system the fibre suspension is subjected to the first dewatering in the dewatering apparatus 63 (Fig.1) of pumping and pressure step 3.

A possible excess of process liquid which has been pressed out in the dewatering apparatus 63' in pumping stage 4 will escape to a lower pressure in pumping step 3, through the overflow or reducing valve 23'.

Heat in the form of steam and chemicals are passed from the supply means 26, 26', 26'' into the pressurized tube system through the check valves 25,25' and 25'' into the communicating tubes 55, 55' 55'' carrying dewatered fibre suspension from the dewatering means 63, 63,' 63'' and 63''' to the pumps 21, 21', 21'' and 21'''.

The two circulation circuits maintained at each of pressure stages 3, 4, 5 and 6 cause turbulence and more rapid chemical reactions within each pressure stage compared with the process according to the above-mentioned international patent application. The pumps 21 will advance the fibre suspension through the process system wherein the fibre suspension is subjected to intermittent thickening with subsequent pulping and dilution of the thickened pulp.

Process liquid which has been pressed out in the dewatering means 81, 81', 81'' and 81''' is returned from the dewatering means to the tubes 55, 55', 55'' and 55''' in which it becomes admixed with fibre suspension which is kept circulating through pumps 21, 21', 21'' and 21'''. Part of, i.e. the excess of, process liquid pressed out in the dewatering apparatus 63, 63', 63'' and 63''' is fed back to the next preceding and lower pressure level through the controlled overflow valves 23, 23', 23'' and 23'''. Thereby the total amount of process liquid pressed out in the dewatering apparatus will, after circulation at different pressure stages, flow back towards the beginning of the process, countercurrent to the fibre flow, and, moreover, as further disclosed in the above-mentioned international application which is incorporated herein by reference.

The valves 23, 23', 23'' and 23''' in the tubes for return of liquids shown in Fig. 1 are pressure operated automatic valves which open at a preset pressure. Because the pressure increase when carrying out the present process takes place in steps or stages, these valves will automatically adjust the back flow of process liquid through the process and thus the counter-flow between fibre flow and process liquid by amounts determined by the amount of liquid (e.g. water) which is pressed into the last stage of the process through the check valve 39 and regulator R₂ 40.

The amount of fresh liquid added through R₂ will also determine the amount of spent process liquid which is discharged from the system through R₁, and thereby also the concentration of solids in the spent process liquid.

After the last dewatering means 81''' the finished fibres are discharged from the pressurized system through the controlled outlet valve R 80.

Because the entire process takes place within an integrated, closed and pressurized tube system ammonia is suitable for use as the cooking chemical. The system underlying the present process can be termed "The TURBO Pulping System" or abbreviated the "TPS process".

During the progress of the process the pumps 21 effect recirculation and reuse of digesting liquid and chemicals and, moreover, mixing and dispersing of added fresh amounts of chemicals and gas to the digesting liquid, stirring and thereby a strong "washing machine effect" within the system and, moreover, optimum utilization of heat and chemicals.

The countercurrent principle utilized for carrying out the present TPS process enables deinking of secondary fibre from various print qualities to be carried out without having to resort to extra mechanical additional equipment. The deinking which is enhanced by particular chemicals added to the process takes place in the pulp prior to or at the same time as the pulp arrives for delignification and, if desired, subsequent bleaching. A suitable chemical in order to enhance the deinking is a non-ionic surface active nonylphenol alkylene oxide adduct.

By means of the present process also so called "explosion pulp" can be produced by causing the pulp to leave the pressurized system without preceding cooling of the liquid-fibre mixture to a temperature below 100°C before discharging it to atmospheric pressure. In this context the uniqueness of the present process is that it also enables "explosions" of pulp from for example relatively elevated pressures of from 15 to 20 bar (dependent upon the number of pumping and pressure stages in the system) and at relatively low temperature in the pressurized system, i.e. from 110 to 150°C, because pressures and temperatures used for the TPS process can be selected independently of one another, i.e. in contrast to conventional pulp production where pressure and temperature are determined by the conventionally used saturated steam. The advantage of combining low temperatures and high pressures during the present process is that the pulp will then be subject to a more mild chemical treatment compared with what the case would have been had the extremely elevated temperatures corresponding to temperatures of saturated steam at such elevated pressures as from 15 to 20 bar been used. The high pressures used in the present process ensure high effect of gaseous additives supplied to the process.

The pressure increase of each pumping stage may be within the range from 0.5 to 10 bar, preferably not above 5 bar.

The dewatering apparatus according to Fig. 4 is preferably used as the dewatering apparatus 63 according to Fig. 1.

## Claims

1. A process for digesting and, optionally, bleaching of plant and wood fibres and/or for delignification and, optionally, deinking of secondary fibres in order to obtain a pulp which is suitable for use as the raw material for production of paper, board, fibreboard and other products which contain plant and/or wood fibres, the process comprising the steps of:
introducing fibrous raw material into a digestion zone in which the raw material is digested in an alkaline slurry at an elevated temperature and pressure using an alkaline cooking chemical in combination with oxygen, and, optionally, minor amounts of other additives, such as antraquinone,
removing the cooking chemicals from the digestion zone in the form of a black liquor which is deposited or subjected to recovery of chemicals therefrom,
conducting the raw material in the form of a pumpable fibre-containing slurry during digestion and optional bleaching through a closed, continuous and pressurized tube system by means of pulp pumps (21) which are simultaneously used as mixing aggregates for the slurry and the chemicals,
subjecting the fibre-containing slurry, while being conducted through the tube system, to repeated dewaterings by pressing out liquid from the fibre-containing slurry,
prior to each dewatering stage apart from the last dewatering stage (81'''), diluting the dewatered fibre-containing slurry with pressed out process liquid returned from a pumping stage which is disposed downstream in the fibre flow,
subjecting the fibre-containing slurry, while being conducted through the tube system, to stepwise increasing pressure in three or more pumping stages (2,3,4,5,6),
prior to the last dewatering stage (81'''), diluting and, optionally, cooling the fibre-containing slurry with fresh water and/or bleaching liquor (R) supplied under pressure, and
after the last dewatering stage, washing the pulp so obtained and, optionally, bleaching the pulp in a continuation of the pressurized tube system or in the non-pressurized state after cold or hot blowing from the pressurized tube system,
characterised in that, at least at each pumping stage (3,4,5) intermediate the first and last pumping stages (2,6), two circulation flows are maintained by and circulate through the same circulation pump (21), one of the circulation flows (21,20,63,21) comprising mainly fibre-containing slurry and the other circulation flow (21,81,21) comprising mainly process liquid pressed out of the fibre-containing slurry in a dewatering-thickening means (81) disposed downstream in the fibre flow and recycled therefrom to the suction side of said circulation pump (21) so that the pressed out process liquid is mixed at said suction side with the fibre-containing slurry circulating in said one circulation flow (21,20,63,21), thereby forming a fibre-containing slurry diluted with the pressed out and recycled process liquid, that part of the diluted fibre-containing slurry is circulated back to a further dewatering-thickening means (63) and the dewatered fibre-containing slurry from said further dewatering-thickening means (63) is passed back to said suction side of the circulation pump (21) of the same pumping stage for mixing with process liquid pressed out in and recycled from the first-mentioned dewatering-thickening means (81), and that the dewatered and thickened fibre-containing slurry is discharged from the first-mentioned dewatering-thickening means (81) to the next circulation flow (21',20',63',21') comprising mainly fibre-containing slurry in the next succeeding pumping stage (4) of higher pressure in the process.

2. A process as claimed in Claim 1, characterized in that it comprises using at each pumping stage (3,4,5,6) apart from the first pumping stage (2) as said dewatering-thickening means a dewatering-thickening means (63) in which the fibre-containing slurry is both dewatered and degasified to form a dewatered and thickened fibre-containing slurry for forming part of said one circulation flow (21,20,63,21) at each pumping stage (3,4,5,6) apart from the first pumping stage (2).

3. A process as claimed in Claim 2, characterized in that dewatered and thickened fibre-containing slurry is passed from the first-mentioned dewatering-thickening means (81) of one pumping stage (3) to the circulation pump (21') of the next pumping stage (4) of higher pressure and, at the suction side of said pump (21'), is mixed with recycled process liquid pressed out in the first-mentioned dewatering-thickening means (81') of said next pumping stage (4), that part of the mixture of thickened fibre-containing slurry and pressed out process liquid is circulated from said pump (21') to the further dewatering-thickening means (63') of said next pumping stage (4) in which said mixture of fibre-containing slurry and pressed out process liquid is concurrently dewatered and degasified, that the mixture of gas and liquid removed from said mixture in the further dewatering-thickening means (63') is returned to the preceding pumping stage (3) for mixing at the suction side of the circulation pump (21) of said preceding pumping stage (3) with the fibre-containing slurry circulating in said preceding pumping stage (3), and that the dewatered and thickened fibre-containing slurry from the further dewatering-thickening means (63') of said next pumping stage (4) is mixed at the suction side of the circulation pump (21') of said next pumping stage (4) with the dewatered and thickened fibre-containing slurry from the first-mentioned dewatering-thickening means (81) of said preceding pumping stage (3).

4. A process as claimed in Claim 3, characterized by use of a screw press as the first-mentioned dewatering-thickening means (81).

5. Apparatus for continuous dewatering, degassing and thickening of low consistency fibre-containing slurry comprising an outer tube (64) and a smaller, perforated dewatering and venting tube (67) arranged centrally and axially within the outer tube (64) for dewatering and degassing fibre-containing slurry through the perforations (68) therein, the apparatus being further provided with an inlet (60) for fibre-containing slurry at one end, an outlet (65,72) for thickened fibre-containing slurry at the other end, and an outlet (71) for filtrate near said one end,
characterized in that the inlet (60) is arranged to introduce low consistency fibre-containing slurry substantially radially into the outer tube (64) at said one end, the outlet (65,72) is arranged to discharge thickened fibre-containing slurry from the outer tube (64) at said other end, and the outlet (71) is arranged to remove filtrate and gas from the centrally arranged dewatering and venting tube (67), the outer tube (64) being similar to a hydrocyclone, and that the centrally arranged venting tube (67) comprises a dewatering screen (50) in the form of a thin, perforated, electrolytically produced metal foil having perforation holes with diameters preferably in the range from 30 to 120 µm, having a foil thickness preferably in the range from 70 to 150 µm and having an open area preferably in the range from 7 to 30%, the dewatering screen (50) being supported on a woven, coarse screen (49) made of metal or plastic wires which in turn is supported on a rigid framework in the form of a perforated metal body (45, 67), whereby the dewatering screen (50), because of its perforation characteristics and its thickness, is kept continuously open and cleaned by continuous flushing thereof with said fibre-containing slurry introduced substantially radially into and set into turbulence in the outer tube (64).

6. Apparatus as claimed in Claim 5, characterised in that the outer tube (64) is perforated, and that an enclosing jacket (73) is arranged around the outer tube (64) and is provided with an outlet (70) for liquid filtered through the perforations in the outer tube (64) into the space formed between the outer tube (64) and the enclosing jacket (73), the perforated outer tube (64) being provided on its inside with the woven, coarse screen (49) upon which the dewatering screen (50) is supported.

## Patentansprüche

1. Verfahren zum Aufschliessen, und, fakultativ, zum Bleichen von Pflanzen- oder Holzfasern und/oder zum Delignifizieren, und, fakultativ, Deinken von Sekundärfasern zur Herstellung von Papierstoff, welcher zur Verwendung als Rohmaterial für die Herstellung von Papier, Pappe, Hartpappe oder anderen Produkten, welche Pflanzen- und/oder Holzfasern enthalten, geeignet ist, wobei das Verfahren die Verfahrensschritte umfasst:
Einbringen des faserförmigen Rohmaterials in eine Aufschliesszone, in welcher das Rohmaterial in einem alkalischen Brei bei erhöhter Temperatur und Druck aufgeschlossen wird, wobei eine alkalische Kochchemikalie in Kombination mit Sauerstoff, und, fakultativ, kleinen Mengen anderer Zusätze, wie etwa Anthrachinon, benutzt wird,
Entfernen der Kochchemikalien aus der Aufschliesszone in Form einer schwarzen Flüssigkeit, welche sedimentiert oder der Rückgewinnung der Chemikalien aus ihr unterzogen wird,
Leiten des Rohmaterials in Form eines pumpfähigen faserenthaltenden Breies, während des Aufschliessens und fakultativn Bleichens durch ein geschlossenes, kontinuierliches und unter Druck stehendes Rohrsystem mit Hilfe von Breipumpen (21), welche gleichzeitig als Mischaggregate für den Brei und die Chemikalien benutzt werden,
Aussetzen des faserhaltigen Breies, während er durch das Rohrsystem geleitet wird, wiederholten Entwässerungsvorgängen durch Auspressen von Flüssigkeit aus dem faserhaltigen Brei,
vor jeder Entwässerungsstufe, mit Ausnahme der letzten Entwässerungsstufe (81'''), Verdünnen des entwässerten faserhaltigen Breies mit ausgepresster Prozessflüssigkeit, welche von einer Pumpstufe, welche im Faserfluss stromabwärts angeordnet ist, zurückgeführt wird,
Aussetzen des faserhaltigen Breies, während er durch das Rohrsystem geleitet wird, einem stufenweise zunehmendem Druck in drei oder mehr Pumpstufen (2,3,4,5,6),
vor der letzten Entwässerungsstufe (81'''), Verdünnen, und, fakultativ, Abkühlen des faserhaltigen Breies mit frischem, unter Druck zugeführten Wasser und/oder Bleichlauge (R), und
nach der letzten Entwässerungsstufe, Waschen des so erhaltenen Papierstoffes, und, fakultativ, Bleichen des Papierstoffes in einer Verlängerung des unter Druck stehenden Rohrsystemes, oder in nicht unter Druck gesetztem Zustand nach kaltem oder warmem Blasen aus dem unter Druck stehenden Rohrsystem,
dadurch gekennzeichnet, dass mindestens bei jeder Pumpstufe (3,4,5) zwischen der ersten und letzten Pumpstufe (2,6) zwei Umwälzströmungen von der gleichen Zirkulationspumpe (21) aufrechterhalten werden und durch diese strömen, wobei eine der Umwälzströmungen (21,20,63,21) hauptsächlich aus faserhaltigem Brei besteht und die andere Umwälzströmung (21,81,21) hauptsächlich aus Prozessflüssigkeit besteht, welche aus dem faserhaltigen Brei in einer Entwässerungs-Eindickungseinrichtung (81), welche im Faserfluss stromabwärts angeordnet ist, herausgepresst wurde und von dort zur Saugseite der Umwälzpumpe (21) zurückgeführt wird, so dass die ausgepresste Prozessflüssigkeit an der Saugseite mit dem faserhaltigen Brei, welcher in der einen Umwälzströmung (21,20,63,21) zirkuliert, gemischt wird, wodurch ein faserförmiger Brei, welcher mit der ausgepressten und zurückgeführten Prozessflüssigkeit verdünnt ist, gebildet wird, dass ein Teil des verdünnten faserhaltigen Breies zu einer weiteren Entwässerungs-Eindickungseinrichtung (63) zurückgeführt wird und der entwässerte faserhaltige Brei von der weiteren Entwässerungs-Eindickungseinrichtung (63) zur Saugseite der Umwälzpumpe (21) derselben Pumpstufe zurückgeleitet wird, um mit in der erstgenannten Entwässerungs-Eindickungseinrichtung (81) ausgepressten und von dieser zurückgeführten Prozessflüssigkeit gemischt wird, und, dass der entwässerte und eingedickte, faserhaltige Brei aus der erstgenannten Entwässerungs-Eindickungseinrichtung (81) zur nächsten Umwälzströmung (21',20',63',21'), welche hauptsächlich faserhaltigen Brei in der nächstfolgenden Pumpstufe (4) höheren Druckes im Prozess besteht, herausgeführt wird.

2. Verfahren nach Anspruch 1, dadurch gekennzeichnet, dass es darin besteht, bei jeder Pumpstufe (3,4,5,6), mit Ausnahme der ersten Pumpstufe (2), als Entwässerungs-Eindickungseinrichtung eine Entwässerungs-Eindickungseinrichtung (63) zu benutzen, in welcher der faserhaltige Brei sowohl entwässert, als auch entgast wird, um einen entwässerten und eingedickten faserhaltigen Brei zu bilden, der einen Teil des einen Umwälzstromes (21,20,62,21) bei jeder Pumpstufe (3,4,5,6), mit Ausnahme der ersten Pumpstufe (2), bildet.

3. Verfahren nach Anspruch 2, dadurch gekennzeichnet, dass entwässerter und eingedickter faserhaltiger Brei von der erstgenannten Entwässerungs-Eindickungseinrichtung (81) einer Pumpstufe (3) zur Umwälzpumpe (21') der nächsten Pumpstufe (4) höheren Druckes geführt wird und an der Saugseite der Pumpe (21') gemischt wird mit zurückgeführter Prozessflüssigkeit, welche in der erstgenannten Entwässerungs-Eindickungseinrichtung (81') der nächsten Pumpstufe (4) ausgepresst worden ist, dass ein Teil der Mischung des eingedickten, faserhaltigen Breies und der ausgepressten Prozessflüssigkeit von der Pumpe (21') zur weiteren Entwässerungs-Eindickungseinrichtung (63') der nächsten Pumpstufe (4) geleitet wird, in welcher die Mischung des faserhaltigen Breies und der ausgepressten Prozessflüssigkeit gleichzeitig entwässert und entgast wird, dass die Mischung von Gas und Flüssigkeit, welche aus der Mischung in der weiteren Entwässerungs-Eindickungseinrichtung (63') entfernt wurde, zur vorangehenden Pumpstufe (3) zurückgeführt wird, um auf der Saugseite der Umwälzpumpe (21) der vorhergehenden Pumpstufe (3) gemischt zu werden mit faserhaltigem Brei, welcher in der vorhergehenden Pumpstufe (3) zirkuliert und, dass der entwässerte und eingedickte, faserhaltige Brei von der weiteren Entwässerungs-Eindickungseinrichtung (63') der nächsten Pumpstufe (4) auf der Saugseite der Umwälzpumpe (21') der nächsten Pumpstufe (4) gemischt wird mit dem entwässerten und eingedickten, faserhaltigen Brei von der erstgenannten Entwässerungs-Eindickungseinrichtung (81) der vorangehenden Pumpstufe (3).

4. Verfahren nach Anspruch 3, dadurch gekennzeichnet, durch die Verwendung einer Schraubenpresse als erstgenannte Entwässerungs-Eindickungseinrichtung (81).

5. Vorrichtung zum kontinuierlichen Entwässern, Entgasen und Eindicken faserförmigen Breies niedriger Konsistenz, mit einem äusseren Rohr (64) und einem kleineren gelöchterten Entwässerungs- und Entlüftungsrohr (67), welches zentrisch und axial in dem äusseren Rohr (64) angeordnet ist, zur Entwässerung und Entgasung faserförmigen Breies durch die darin befindlichen Perforationen, wobei die Vorrichtung desweiteren versehen ist mit einem Einlass (60) für faserhaltigen Brei an einem Ende, einem Auslass (65,72) für eingedickten, faserhaltigen Brei an dem anderen Ende und einem Auslass (71) für Filtrat nahe an dem einen Ende,
dadurch gekennzeichnet, dass der Einlass (60) angeordnet ist, um faserhaltigen Brei niedriger Konsistenz im wesentlichen radial in das äussere Rohr (64) an dem einen Ende einzuführen, der Auslass (65,72) angeordnet ist, um eingedickten, faserhaltigen Brei von dem äusseren Rohr (64) an dem anderen Ende herauszulassen, und der Auslass (71) angordnet ist, um Filtrat und Gas von dem zentral angeordneten Entwässerungs- und Entgasungsrohr (67) zu entfernen, wobei das äussere Rohr (64) einem Hydrozyklon ähnlich ist, und, dass das zentral angeordnete Entlüftungsrohr (67) ein Entwässerungssieb (50) in Form einer dünnen, perforierten, elektrolytisch hergestellten Metallfolie, welche Perforationen mit Durchmessern, vorzugsweise im Bereich von 30 bis 120 µm, einer Foliendicke, vorzugsweise im Bereich von 70 bis 150 µm und einem freien Bereich, vorzugsweise im Bereich von 7 bis 30% hat, umfasst, wobei das Entwässerungssieb (50) von einem gewebten Grobsieb (49) aus Metall- oder Kunststoffdrähten getragen wird, welches seinerseits auf einem starren Rahmen in Form eines perforierten Metallkörpers (45,67) getragen wird, wodurch das Entwässerungssieb (50), auf Grund seiner Perforationseingenschaften und seiner Dicke, durch kontinuierliches Spülen desselben mit dem im wesentlichen radial in das äussere Rohr (64) eingeführten und darin in Turbulenz versetzten faserhaltigen Breies kontinuierlich frei gehalten und gereinigt wird.

6. Vorrichtung nach Anspruch 5, dadurch gekennzeichnet, dass das äussere Rohr (64) perforiert ist und, dass eine umschliessende Verkleidung (73) um das äussere Rohr angeordnet und mit einem Auslass (70) für die durch die Perforationen in dem äusseren Rohr (64) gefilterte Flüssigkeit in dem Raum zwischen dem äusseren Rohr (64) und der umschliessenden Verkleidung (73) versehen ist, wobei das perforierte äussere Rohr (64) auf seiner Innenseite mit dem gewebten Grobsieb (49), von welchem das Entwässerungssieb (50) getragen wird, versehen ist.

## Revendications

1. Procédé pour lessiver et, facultativement, blanchir des fibres végétales et de bois et/ou pour délignifier et, facultativement, déencrer des fibres secondaires afin d'obtenir une pâte de cellulose qui est appropriée pour être utilisée comme matière première pour la production de papier, de carton, de carton dur et d'autres produits qui contiennent des fibres végétales et/ou de bois, le procédé comprenant les étapes de:
introduire de la matière brute fibreuse dans une zone de lessivage dans laquelle la matière brute est lessivée dans une boue alcaline à une température et pression élevées en utilisant une matière chimique alcaline de cuisson en combinaison avec l'oxygène, et, facultativement, des quantités mineures d'autres additifs, tel que l'anthraquinone,
enlever les matières chimiques de cuisson de la zone de lessivage sous forme d'une lessive noire qui est sédimentée ou soumise à la récupération des produits chimiques de celle-ci,
conduire la matière brute sous forme d'une boue contenant des fibres pouvant être pompée pendant le lessivage et le blanchissage facultatif à travers un circuit de tubes fermé, continu et sous pression au moyen de pompes à pâte (21) qui sont utilisées simultanément comme aggrégat mélangeur pour la boue et les produits chimiques,
soumettre la pâte contenant des fibres, pendant qu'elle est conduite à travers le système de tube, à des essorages répétés en exprimant du liquide de la boue contenant des fibres,
avant chaque étape d'essorage, à part de la dernière étape d'essorage (81'''), diluer la pâte essorée contenant des fibres avec du liquide consommable exprimé retourné d'une étage de pompage qui est disposé en aval dans le flux de fibres,
soumettre la pâte contenant des fibres, pendant qu'elle est conduite à travers le système de tubes, à une augmentation de pression par étape dans trois ou plus d'étages de pompage (2,3,4,5,6,),
avant la dernière étape d'essorage (81'''), diluer, et, facultativement, refroidir la pâte contenant des fibres avec de l'eau fraiche et/ou de la lessive de blanchiment (R) fournie sous pression, et
après la dernière étape d'essorage, laver la pulpe ainsi obtenue et, facultativement, blanchir la pulpe dans une continuation du système de tubes sous pression ou à l'état non comprimé après soufflage à froid ou à chaud hors du système de tubes sous pression,
caractérisé en ce qu'au moins à chaque étage de pompage (3,4,5) intermédiaire aux premier et dernier étages de pompage (2,6), deux flux de circulation sont maintenus par et circulent à travers la même pompe de circulation (21), un des flux de circulation (21,20,63,21) étant formé principalement de boue contenant des fibres et l'autre flux de circulation (21,81,21) étant formé principalement de liquide consommable exprimé de la boue contenant des fibres dans un moyen d'essorage-épaississement (81) disposées en aval dans le flux de fibres et recyclées à partir de celui-ci vers le côté d'aspiration de ladite pompe de circulation (21) de sorte que le liquide consommable exprimé est mélangé sur le côté d'aspiration avec la boue contenant des fibres circulant dans ledit un flux de circulation (21,20,63,21), formant ainsi une boue contenant des fibres dilué avec du liquide consommable exprimé et recyclé, qu'une partie de la boue diluée contenant des fibres est circulée en arrière vers un moyen supplémentaire d'essorage-épaississement (63) et la boue essorée contenant des fibres dudit moyen supplémentaire d'essorage-épaississement (63) est retournée vers le côté d'aspiration (21) de la même étage de pompage pour être mélangée avec du liquide consommable exprimé dans et recyclé à partir dudit moyen d'essorage-épaississement (81) mentionné en premier lieu, et que la boue essorée et épaissie contenant des fibres est déchargée du moyen d'essorage-épaississement (81) mentionné en premier lieu vers le flux de circulation suivant (21',20'63',21') formé principalement de boue contenant des fibres dans l'étage de pompage (4) suivant de pression plus élevée dans le procédé.

2. Procédé selon la revendication 1, caractérisé en ce qu'il consiste à utiliser à chaque étage de pompage (3,4,5,6), à l'exception du premier étage de pompage (2), comme moyen d'essorage-épaississement un moyen d'essorage-épaississement (63) dans lequel la boue contenant des fibres est aussi bien essorée que dégazéifiée pour former une boue essorée et épaissie contenant des fibres pour former une partie dudit un flux de circulation (21,20,63,21) à chaque étage de pompage (3,4,5,6) à l'exception du premier étage de pompage (2).

3. Procédé selon la revendication 2, dans lequel la boue essorée et épaissie contenant des fibres passe du moyen d'essorage-épaississement (81) mentionné en premier lieu d'un étage de pompage (3) vers la pompe de circulation (21) de l'étage de pompage (4) suivant de pression plus élevée et est mélangée sur le côté d'aspiration de ladite pompe (21') avec du liquide consommable recyclé exprimé dans ledit moyen d'essorage-épaississement (81') mentionné en premier lieu de l'étage de pompage suivant (4), qu'une partie du mélange de boue épaissie contenant des fibres et du liquide consommable exprimé est circulée de ladite pompe (21') vers un moyen d'essorage-épaississement (63) supplémentaire dudit étage de pompage (4) suivant dans lequel ledit mélange de boue contenant des fibres et de liquide consommable exprimé est en même temps essoré et dégazéifié, que le mélange de gaz et de liquide enlevé dudit mélange dans ledit moyen d'essorage-épaississement (63') supplémentaire est retourné vers l'étage de pompage (3) précédent pour être mélangé sur le côté d'aspiration de la pompe de circulation (21) dudit étage de pompage précédent (3) avec la boue contenant des fibres circulant dans ledit étage de pompage précédent (3), et que la boue essorée et épaissie contenant des fibres dudit moyen d'essorage-épaississement (63') supplémentaire de l'étage de pompage (4) suivant est mélangée sur le côté d'aspiration de la pompe de circulation (21') dudit étage de pompage suivant (4) avec de la boue essorée et épaissie contenant des fibres dudit moyen d'essorage-épaississement (81) mentionné en premier lieu dudit étage de pompage (3) précédent.

4. Procédé selon la revendication 3, caractérisé par l'utilisation d'une presse à vis comme moyen d'essorage-épaississement (81) mentionné en premier lieu.

5. Appareil pour l'essorage, la dégazéification et l'épaississement continus d'une boue contenant des fibres de faible consistance, comprenant un tube extérieur (64) et un tube d'essorage et d'échappement perforé (67) disposé centralement et axialement dans ledit tube extérieur pour essorer et dégazer la boue contenant des fibres à travers ses perforations (68), ledit appareil étant en outre pourvu à une extrémité d'une entrée (60) pour la boue contenant des fibres, à l'autre extrémité d'une sortie (65,72) pour la boue épaissie contenant des fibres, et d'une sortie (71) pour le filtrat à proximité de ladite une extrémité,
caractérisé en ce que l'entrée (60) est arrangée pour introduire la boue contenant des fibres de faible consistance substantiellement radialement dans ledit tube extérieur (64) à ladite une extrémité, la sortie (65,72) est arrangée pour décharger la boue épaissie contenant des fibres du tube extérieur (64) à ladite autre extrémité, et la sortie (71) est arrangée pour enlever le filtrat et le gaz du tube d'essorage et d'échappement (67) disposé centralement, ledit tube extérieur (64) étant similaire à un hydrocyclone, et en ce que le tube d'échappement (67) disposé centralement comprend un tamis d'essorage (50) sour forme d'une feuille métallique mince, perforée, produite de façon électrolytique, ayant des trous de perforation d'un diamètre de préférence dans la bande de 13 à 120 µm, ayant une épaisseur de feuille de préférence dans la bande de 70 à 150 µm et ayant une surface ouverte de préférance dans la bande de 7 à 30%, le tamis d'essorage (50) étant porté par un tamis à grosses mailles (49) tissés à partir de fils métalliques ou plasstiques, qui est à son tour porté par un cadre rigide sous forme d'un corps métallique perforé (45,67), de sorte que le tamis d'essorage (50), à cause de ses caractéristiques de perforation et son épaisseur, est maintenu ouvert et nettoyé de façon continue par rinçage continu de celui-ci avec ladite boue contenant des libres introduite substantiellement radialement dans ledit tube extérieur (64) dans lequel elle est mise en turbulence.

6. Appareil selon la revendication 5, caractérisé en ce que ledit tube extérieur (64) est perforé et qu'une enveloppe (73) fermée est disposée autour du tube extérieur (64) et est pourvue d'une sortie (70) pour le liquide filtré par les perforations dans ledit tube extérieur (64) dans l'espace formé entre ledit tube extérieur (63) et ladite enveloppe fermée (73), le tube extérieur perforé (64) étant pourvu sur sa surface intérieure d'un tamis à grosses mailles tissée (49) sur lequel est porté le tamis d'essorage (50).
